# EUROPEAN PATENT SPECIFICATION

(11) **EP 0 771 296 B1**
(45) Date of publication and mention of the grant of the patent: **16.04.2003**
(21) Application number: 95926091.0
(22) Date of filing: 18.07.1995
(51) Int. Cl.: B65G 63/02, B60P 1/64

(54) **A DEVICE COMPRISING HOLDING ELEMENTS**
VORRICHTUNG MIT HALTERUNGSGLIEDERN
SYSTEME D'ELEMENTS DE RETENUE

(30) Priority: 18.07.1994 SE 9402504
(43) Date of publication of application: 07.05.1997
(73) Proprietor: Lövgren, Sten, 439 33 Onsala (SE)
(72) Inventor: Lövgren, Sten, 439 33 Onsala (SE)
(74) Representative: Olsson, Jan
(86) International application number: PCT/SE95/00870
(87) International publication number: WO 96/002446

(56) References cited:
- DE-A- 1 917 823
- US-A- 3 924 544
- US-A- 4 108 081

## Description

### FIELD OF THE INVENTION AND PRIOR ART

This invention is related to a device in holding elements according to the pre-characterising part of claim 1.

The load units intended here may be of the most differing kinds, such as containers, cabinets, simple platforms, complex load carrier structures of special design etc. Such load units or "containers" comprise corner fittings for interaction with holding elements of the carrier. The corner fittings as well as the holding elements are used to a great extent and they are the subject matter of national and international standards so that containers can be transported and handled by means of carriers provided with holding elements without problems as far as lacking correspondence is concerned. Reference is for instance made to the standards SIS 842101, 842104 and 842105 issued by Sveriges Standardiseringskommission. A condition according to this standard and for the present invention is that the load units or the containers should be capable of being supported only via those corner fittings and that the holding elements placed on the carrier should be capable of supporting, by their own, the load unit or container relative to the chassis of the carrier without need for further supporting arrangements.

According to prior art such holding elements are arranged on the carrier so that when a load unit rests on the holding elements by means of its corner fittings, some particular kind of lifting equipment is required in order to elevate the load unit so that it disengages the locking means of the holding elements. In case the load unit is intended to be transferred between two different carriers by means of a transfer arrangement comprising at least one arm, which is extendible and retractable respectively in the transverse direction of the carriers and which forms a path of movement for a carrying member contained in the transfer arrangement, said carrying member being guidedly movable along the arm and adapted to support the load unit which is displaced, measures must be taken in order to get the arm and carrying member in under the load unit. Such measures may involve provision of some additional lifting equipment, a fact which, however, is cost increasing and involves difficulties as far as adequate force application on the load unit is concerned, or alternatively, the carrying member must be provided with lifting members capable of lifting the load unit out of engagement with the holding elements, which, however, requires considerable complication with respect to the design of the load carrying chassis of the carriers or the load carrier structure placed thereupon and in any case reduces the total load volume transportable on the carrier.

Some load units are provided with support legs intended to support against an underlayer. In order to be able to place such a load unit on the ground, it is required either a lifting equipment which lifts the load unit off the carrier or that an upper frame part of the carrier may be lowered relative to a lower frame part so that the holding elements provided on the upper frame part disengage from the corner fittings of the load unit, whereupon the carrier may be driven away from the position under the load unit. The cost of such lifting equipment or for such a frame structure with parts mutually vertically movable is considerable.

DE-A-1917823 discloses a holding element arranged to be elevatable by means of a force exerting arrangement in order to manoeuvre a load unit vertically, which element comprises locking means having first locking members adapted to lock the load unit and a carrier against relative movement in a horizontal plane and second locking members movable between a releasing position and a locking position for locking the load unit and carrier against relative movement vertically. The locking members for locking the load unit and carrier against relative movement vertically are operated manually by means of an operating rod. The locking members of all four holding elements comprised in a normal arrangement for supporting a load unit on a carrier requires separate and manual operation for movement between a releasing position and a locking position. This operation is therefore rather trying and time-consuming.

### SUMMARY OF THE INVENTION

The object of the present invention is to devise ways to eliminate or at least reduce the above mentioned inconveniences, and, accordingly, provide possibilities to move the locking members for locking a load unit and a carrier against relative movement vertically between a releasing position and a locking position in an alternative manner.

According to the invention this object is achieved by a device having the features of the characterising part of claim 1. In this way, said locking members can be operated automatically for movement between a releasing position and a locking position during the lowering or lifting of the load unit.

### BRIEF DESCRIPTION OF THE DRAWINGS

The invention will be described in the following with reference to the enclosed drawings, which illustrates an example of an embodiment of the invention.

In the drawings:
- Fig. 1: is a diagrammatical view of a carrier in the form of a road vehicle having container holding elements;
- Fig. 2: is a perspective view of a carrier in the form of a railway vehicle,
- Fig. 3: is a diagrammatical view illustrating a load unit which is to be transferred from a first carrier to a second carrier;
- Fig. 4: is a view similar to Fig. 3 but showing the load unit on the second carrier;
- Fig. 5: is a view, which is partially cut longitudinally, of a first embodiment of a holding element according to the invention in a lowered position in a body;
- Fig. 6: is a view similar to Fig. 5 but illustrating the holding element in an elevated position in the body;
- Fig. 7: is a view illustrating the design of a guide member according to the invention;
- Fig. 8: is a view similar to Fig. 5 but of another embodiment;
- Fig. 9: is a view similar to Fig. 8 but with the holding element elevated relative to the body; and
- Fig. 10: is a view similar to Fig. 7 of a guide member included in the embodiment according to Figs. 8 and 9.

### DETAILED DESCRIPTION OF A PREFERRED EMBODIMENT

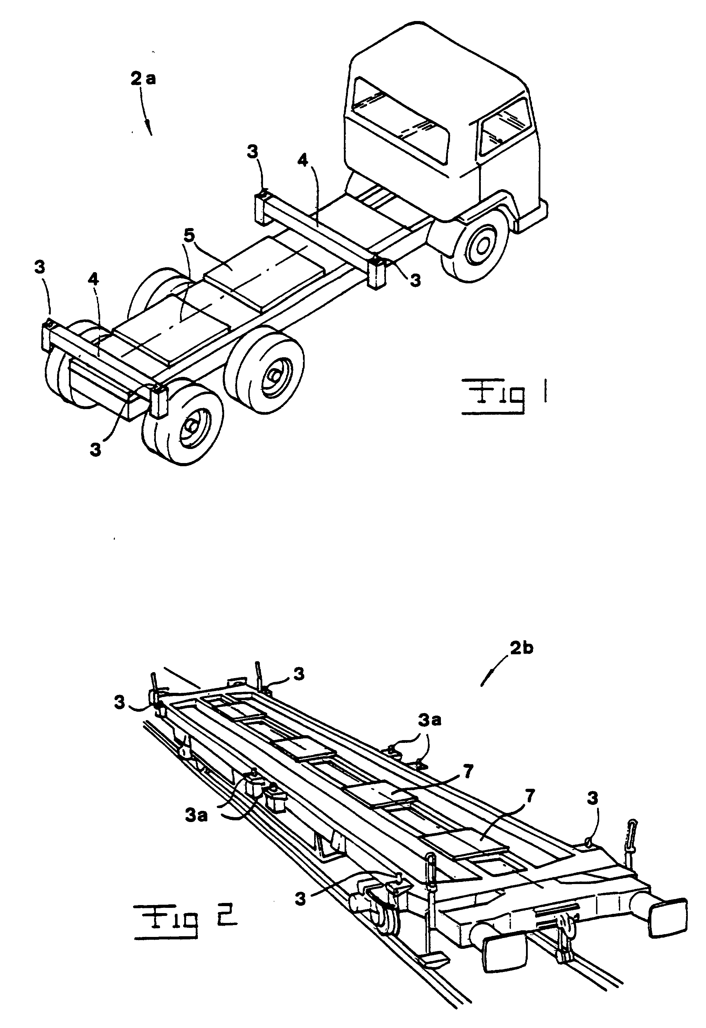

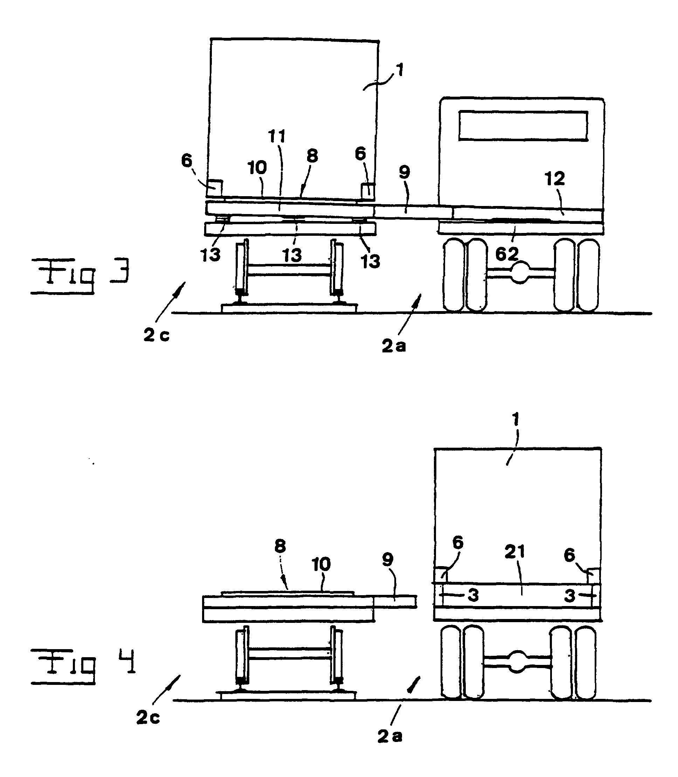

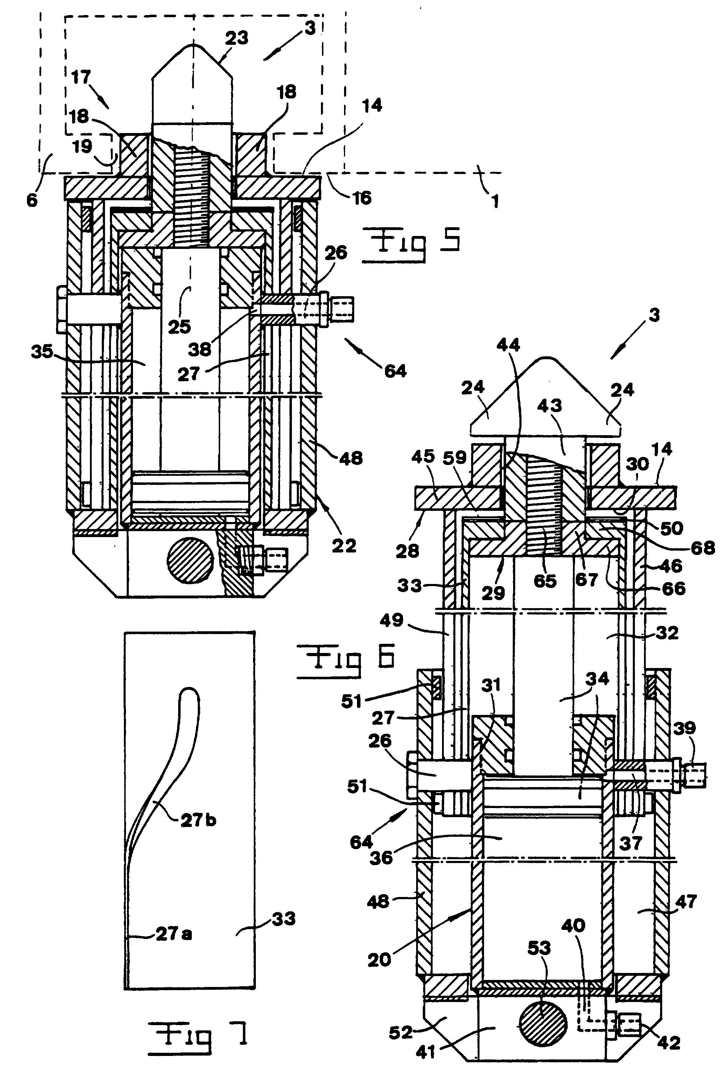

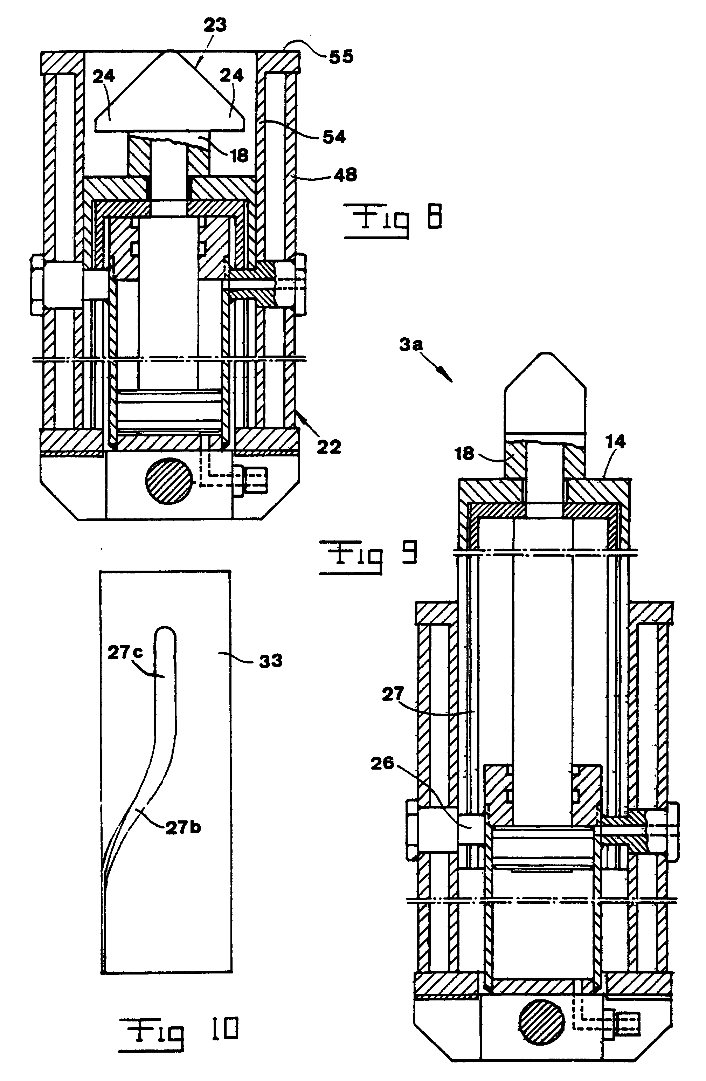

The present invention is related to holding elements intended for location on a carrier, for instance in the form of a vehicle, in order to hold a load unit, for instance like the one denoted 1 in Figs. 3 and 4, thereon. Carriers 2 are illustrated in Figs. 1 and 2 in the form of vehicles in two different versions. More specifically, the vehicle in Fig. 1 has the character of a road vehicle 2a, whereas the one in Fig. 2 has the character of a railway vehicle 2b. Both of these vehicles comprise holding elements generally denoted 3. The holding elements 3 are shown in Fig. 1 as provided on container cross beams 4 or the like included in the load carrying construction on the road vehicle. The load carrying construction on the road vehicle 2a comprises, in addition, support surface forming structures 5, the object of which will be described later. Thus, there are illustrated in the example four holding elements 3 on the road vehicle 2a, said holding elements being adapted to support a load unit via its corner fittings 6 (see Figs. 3 and 4).

The railway vehicle 2b in Fig. 2 comprises eight holding elements 3, which, accordingly, are capable of supporting and holding two shorter load units 1. Alternatively, one single long load unit may instead be intended to be supported on the railway car, in which case the four holding elements 3 placed at the comers of the railway car will be used and the holding elements 3a placed in the middle area of the car will be inactive by being retracted downwardly into lower positions, in which they are out of the way for a load unit placed on the other holding elements 3. Similar to what has just been described for the road vehicle 2a according to Fig. 1, also the railway car 2b comprises support surface forming structures 7 placed along the longitudinal vertical middle plane of the car for centric load support.

The holding elements denoted 3 in Figs. 1 and 2 are of the type which in the following will be described with assistance of Figs. 5-7 whereas the holding elements denoted 3a are intended to be of the type illustrated in Figs. 8-10.

It is illustrated in Fig. 3 how a carrier 2c comprises a transfer arrangement 8 comprising at least one arm 9, which is extendible and retractable respectively in the transverse direction of the carrier 2c and which forms a path of movement for a carrying member 10 included in the transfer arrangement 8, said carrying member being guidedly movable along the arm and adapted to support the load unit 1 intended to be displaced.

The carrier 2c is conceived, in the example, to have the character of a transfer carrier, the purpose of which is, primarily, to transfer load units 1 between two different other carriers such as those denoted 2a and 2b. In Figs 2 and 4 the transfer of a load unit 1 from the transfer carrier 2c to a carrier denoted 2a in the form of a road vehicle is illustrated. The carrier 2c is illustrated as being a railway vehicle. It is pointed out that it is not a necessity that both carriers 2a and 2c are formed by vehicles; one of the carriers could be replaced by a stationary carrying arrangement for receiving and, possibly, storing the load unit 1 in question during a certain time.

The extendible arm 9 may for instance have the character of a telescope boom having a base part 11 placed on the carrier 2c and an extreme part 12 arranged to be applied in such a manner on the carrier 2a that the load from the arm 9 is applied centrally on the carrier 2a, i.e. on its longitudinal centre line, on the structures 5. Between the extreme part 12 of the arm and the carrier 2a there may be load applying and possibly load equalising means 62, for instance in the form of one or more cushions or bellows filled/fillable by means of the pressure fluid. The means 62 could for the rest also have the function to vary the vertical position of the extreme part 12 of the arm 9 relative to the load carrying construction of the carrier 2a. Between the load carrying construction of the carrier 2c and the base part 11 of the arm 9 there are also, according to a possible embodiment, means 13 capable of varying the vertical position of the base part 11 relative to the load carrying construction and possible also of inclining the entire arm 9 by inclination of the base-part 11 so that the arm forms a sloping path of movement for the carrying member 10 which has the character of a slide or carriage. It is pointed out that the arm 9 is intended to form a rigid load supporting construction in extended position, i.e. that the arm forms a rigid path of movement, which cannot be deflected downwardly, for the carrying member 10 between support points on the carriers 2a and 2c located on their longitudinal centre lines.

As appears from Fig. 4 the carrier 2a comprises holding elements 3. As already has been described, these holding elements are formed by standardised elements, which comprise, on one hand, support members 14 (see Figs. 5 and 6) for vertically supporting the load unit 1 by supportingly abutting against support surfaces 16 provided on the corner fittings 6, which are indicated with dashed lines in Fig. 5, of the load unit, and, on the other hand, locking means 17 comprising locking members 18, intended to lock the load unit and the carrier 2 against relative displacement in the horizontal plane by interaction with corresponding locking members 19 on the load unit. As appears from Fig. 5, the locking members 18, 19 are formed by projections/ recesses engaging with each other. More specifically, the locking members 18 on the holding element 3 are formed by projections whereas the locking member 19 is formed by a recess. The locking member 18 could consist of a single projection but as will be described more closely in the following, the locking members 18 comprise two mutually separated and upwardly directed projections adapted to be located in the ends of the recess 19, which has the character of an elongated hole.

The holding element 3 is arranged to be raised and lowered between the positions illustrated in Figs. 5 and 6 by means of a force exerting arrangement 20 in order to operate, with maintained support and locking function discussed above, the load unit 1 vertically in conjunction with further holding elements 3.

The holding elements 3 arranged on the carrier (see 2a in Fig. 4) are in their upper positions adapted to give rise to open spaces 21 under a carried load unit between the latter and the carrier 2a, said open spaces being intended to receive load handling equipment, in particular the previously described arm 9 and the carrying member 10 movable thereon for transfer of the load unit 1 between different carriers. More specifically, the holding element 3 is vertically movable along a body 22 attached to the carrier in question, said body having the character of a guide for guiding the holding element vertically.

On transfer of a load unit 1 to the carrier 2a in Figs. 3 and 4 the arms 9 are initially extended such that their extreme parts 12 will rest upon the carrier 2a. The arms 9 are conceived to be two in number but may be fewer as well as more than that. The carrying member 10 is then displaced, together with a load unit 1 resting thereupon, over to a position above the carrier 2a along the arms 9, whereupon the holding elements 3 on the carrier 2a are elevated into a supporting and, as far as relative horizontal movement is concerned, locking engagement with the corner fittings 6 on the load unit 1, and furthermore, so that the latter is elevated from the underlying carrying member 10. The carrying member 10 may then be displaced back to its position above the carrier 2c and, finally, the arms 9 are retracted as indicated in Fig. 4. The load unit 1 may then be lowered by lowering the holding elements 3 so that they in a lower position define a normal transport level for the load unit 1. When the load unit 1 is to be transferred away from the carrier 2a, the load unit may again be elevated by means of the holding elements 3 such that the transfer arrangement 8 may be moved into the space 21 under the load unit. In that way a safe and controlled elevation /lowering of the load unit 1 by means of the holding elements is achieved and it is avoided that the carrying members 10 must comprise lifting members of their own capable of elevating and lowering, by themselves, the load unit 1.

Above the minimum criteria have been described as far as the holding elements 3 and the comer fittings 6 co-operating therewith are concerned, namely that they should be capable of functioning vertically supporting and mutually locking in a horizontal direction, so that the load unit 1 does not fall off the carrier 2 by movement in the horizontal direction. However, a more developed aspect is also contained within the scope of the invention, said aspect including that the locking means 17 also should be capable of locking the load unit 1 and the carrier 2 against relative movement vertically and for this purpose the locking means comprise, in addition to the mentioned first locking members 18, second locking members 23, which are movable between a releasing position (Fig. 6) and a locking position (Fig. 5). In said locking position (Fig. 5) the locking members 23 are intended to co-operate in a locking manner with the corner fittings 6 of the load unit 1 such that the latter cannot leave its position on the holding element 3. It is then preferred that the second locking members 23 comprise one or more, in the embodiment two, portions 24 adapted to be placed above portions of the corner fitting 6 in order to prevent the same from moving upwardly; in a direction downwardly, the relative movement is prevented as before by the supporting engagement between the surfaces 14, 16.

The device comprises operating means 64 adapted to operate the locking members 23 to their releasing position on elevation of the holding element 3 and to their locking position on lowering of the holding element by means of the force exerting arrangement 20. More specifically, the operating means 64 are intended to be arranged to derive force for operating the locking members 23 from the force which is developed by the force exerting arrangement 20 for elevating or lowering of the load unit 1 and/or from the gravitational force actuating the load unit in a lowering direction.

The second locking members 23 are, in the example, arranged to describe a rotational movement about a substantially vertical geometric axis 25 on their operation between the first and second positions. The operating means 64 comprises first and second engaging guide members 27, 26, first 27 of which are connected to the second locking members 23 and second 26 of which are connected to the body 22.

The first andlor second guide members 26, 27 have an extent which is at least partially oblique relative to the substantially vertical path of movement of the holding element 3. The guide members 26, 27 are preferably formed by at least one set of mutually engaging projection/recess. In the example at least one recess 27 forms the first guide members, whereas at least one projection 26 forms the second guide members 26.

The support members 14 are arranged on a first part 28 prevented from rotation relative to the body 22, a second part 29 comprising the second locking members 23 being rotatable relative to the first part. The first part 28 is arranged to be brought along by the second part 29 on elevation of the holding element 3. As a member 59 for bringing along the first part 28, a support surface provided on the second part 29 functions, said support surface applying, on actuation upwardly of the second part, forces on a surface 30 of the first part 28 for bringing the latter along with it.

The second part 29 is connected to the force exerting arrangement 20, which has a stationary portion 31 projecting into a cavity 32 in the second part 29, said stationary portion 31 being rigidly connected relative to the body 22 and being possible to describe as forming an integrated part thereof. The cavity 32 is defined by a tubular section 33 of the second part 29. The first guide members 27 are formed by at least one slot like recess 27 in the tubular section 33, said recess being at least partially oblique. The section 33 is illustrated on its own in Fig. 7 and there the oblique extent of the recess 27 is also apparent at 27b.

The second guide members 26 are formed by at least by one projection which is connected to the body 22 and in the example also to the stationary portion 31 of the force exerting arrangement 20. The projections 26 may then form rigid connecting bridges between the inner stationary portion 31 of the force exerting arrangement 20 and a portion, which is present externally thereof, of the body 22, said portion here being designed as a tube section.

It is preferred that the force exerting arrangement 20 is formed by a power member being of a type having a variable length and two sections movable relative to each other, a first of the sections being fixed relative to the body 22 whereas a second 34 is attached to the second part 29. The first section of the mechanism is formed by the previously described stationary portion 31. It is preferred that the power member having a variable length is formed by a pressure fluid mechanism, the section 31 forming a cylinder whereas the section 34 forms a piston/piston rod.

The piston delimits two working chambers 35, 36 in the cylinder 31. Pressure fluid is intended to be supplied to the working chamber 35 above the piston via a pressure fluid channel 37 extending through the projection 26 and through an opening 38 in the cylinder mantle. At its extreme end, the projection 26 comprises a suitable nipple or the like 39 for connection to a pressure fluid line. The second working chamber 36 under the piston communicates with a pressure fluid channel 40 extending through that end wall of the cylinder 31 which is turned away from the piston rod opening and which extends within a plate 41 fixed to this gable by means of for instance welding, said plate being orientated perpendicularly to the plane of the cylinder end wall. The channel 40 is connectable to a pressure fluid line or the like by a suitable connection member 42.

The second part 29 comprising the second locking members 23 has a portion 43 projection through an opening 44 in the first part 28. The opening 44 is suitably formed in a plate piece 45, which on its upper side forms the support surfaces 14 and there carries the projections 18 placed adjacent to the opening 44 and which on its lower side comprises the surface 30, against which the support surface 59 is intended to abut.

The first part 28 has a tubular section 46 which is located around the tubular section 33 of the second part. These two tubular sections 33, 46 are intended to be received in a cross-sectionally annular gap 47 between the outer sleeve 48 included in the body 22 and the portion or cylinder 31.

The projections 26 may be from one and upwardly in number. In case the projections are two in number, as in the example illustrated, they are conceived to be located diametrically opposite to each other and extend transversely to the vertical path of movement of the holding element. Furthermore, the projection/projections 26 are intended to bridge the annular gap 47, a fact which means that not only the tube section 33 but also the tube section 46 must comprise a slotlike recess 49 in order to be able to receive the projection/projections 26. This or these recesses 49 extend, however, parallel to the path of movement of the holding element, a fact which means that the first part 28 will not be subjected to any rotational movement on elevation and lowering, which forms a difference with respect to the second part 29, which will be imparted such a rotational movement as a consequence of the oblique extent of the recess/recesses 27. Since the tube section 33 is secured against relative rotation with respect to the locking members 23, also these will be subjected to a rotational movement. In order to avoid undue friction by abutment of the support surface 59 against the surface 30, as a consequence of rotation of the former relative to the latter, at least one of these surfaces comprises a low friction coating 50, for instance of TEFLON. The support surface 59 has an annular shape and is located about the portion 43 of the second part 29, said portion 43 extending through the opening 44.

In the example the tube section 33 is conceived to be, like the cylinder mantle, cross-sectionally circular whereas the tube section 46 and the guide sleeve 48 are conceived to be cross-sectionally polygonal, e.g. rectangular. The tube section 46 is intended to be guided by the guide sleeve 48 present externally thereof, possibly via abutment elements 51 lying therebetween. Furthermore, it is preferred that the first part 28 obtains guiding from the second part 29 and/or guides the latter in that the outside of the portion 43 and the boarder surface defining in the opening 44 abut against each other in a guiding manner.

The body 22 comprises, at its end facing away from the locking members 23, at least one and preferably two plate pieces 52, which are secured to the body 22/sleeve 48 and extend in the prolongation thereof. For fixing the force exerting arrangement 20 a pin like locking member 53 is intended to be moved transversely to the plate elements 41, 52 and locked in position by means of a thread connection, locking pins or similar. In that way the arrangement 20 will be locked longitudinally and radially relative to the body 22 at its lower end. A distance in a direction upwardly the projections 26 described will engage with the arrangement 20, in particular the upper part of its cylinder 31, so as to secure the position. This is preferably achieved by a part included in the projections 26 being introduced, from the outside of the body 22, through a hole in the body into thread engagement with another part contained in the projection 26, said other part being permanently secured to the cylinder 31.

The piston 34 comprises a thread shaft 65 engaging with an internally threaded hole in a piece, which comprises the portion 43 and the locking members 23. A further piece 66, which likewise is in thread engagement with the thread shaft 65, has a portion 67, which is externally unround, for engagement with a corresponding hole, which is internally unround, in a further piece 68, which is connected to the tube section 33. Thus, the tube section 33 is connected to the locking members 23 so as to be prevented from rotation relative thereto.

The device is intended to be dismantleable, something which may be obtained by removing the sidewardly projecting connecting members 42, removing the locking pin 43 and finally also removing the outer parts forming the projections 26, whereafter the two parts 28, 29 with accompanying locking members 23 and force exerting arrangement 20 may be withdrawn upwardly out of the external tube sleeve 48 of the body 22.

The device described in Figs. 5-7 operates in the following manner: When the holding element 3 is elevated to its elevated position according to Fig. 6 by means of the arrangement 20, the second part supports, by means of its support surface 59, the first part 28 and the projections 26 are present in an axial portion 27a of the recess 27. The locking member 23 is then in a releasing position, i.e. that a corner fitting 6 of a load unit 1 possibly resting on the holding element 3 then may be freely lifted off the holding element 3 in a direction upwardly. When the holding element 3 is lowered relative to the body 22, either by the gravity pressing down the holding element 3 and pressing out pressure fluid from the working chamber 36 of the arrangement 20 or by, in addition, the lowering movement being assisted by supply of pressure fluid to the working chamber 35 via the channel 37, the tube section 33 will move downwardly so that the projections 26 arrive in the oblique portion 27b of the recess. This means that the tube section 33 is rotated and at the same time also the locking members 23 are rotated such that the portions 24 will be present in a locking manner on top of portions of a comer fitting 6 of a load unit 1 resting on the holding element 3. The oblique portion 27b is designed so that the locking members 23 will be rotated about 90° between releasing and locking positions. In the lowermost position according to Fig. 5 the locking members 23 are in the locking position. This is intended to be a normal transport position for the holding element 3 and the corner fitting 6 then rests on its support surfaces 14 whereas the locking members 18 project into the hole 19 in the comer fitting 6 and secure the same against movement relative to the holding element in horizontal direction and the locking members 23 preclude, by being present on top of portions of the comer fitting 6, movement upwardly of the corner fitting relative to the holding element. Thus, the comer fitting 6 is completely secured relative to the holding element in the position according to Fig. 5. When the holding element 3 then is elevated again, the load unit 1 will be elevated and at the same time the locking members 23 are operated to releasing position in a reversed manner. This elevated and released position of the holding element 3 corresponds to the position illustrated in Fig. 4. In this position a transfer arrangement introduced into the space 21 under the load unit may, on subsequent lowering of the holding elements 3, take over the weight of the load unit 1 at the same time as the holing elements 3 disengage from the comer fittings of the load unit.

The embodiment illustrated in Figs. 8-10 corresponds in all essentials to the one described in Figs. 5-7 with exception of the fact that the holding element 3a, as already has been described with assistance of Fig. 2, here is intended to be lowerable so far that it does not interfere with a load unit carried by other holding elements 3, i.e. so that this load unit may extend above the holding element 3a without contacting the same. For this purpose the body 22 with its tube sleeve 48 is so much higher that the entire holding element 3a including locking members 23 may be received within the tube sleeve 48, which here for the rest is illustrated as having double walls in that an inner sleeve member 54 rigidly attached to the body 22 has been added. As in the embodiment according to Figs. 5-7 the holding element 3a includes also here support members 14 for abutting against the comer fitting of a load unit and also locking members 18 in the form of projections intended to project into the ends of an elongated hole in the corner fitting. As before, the locking members 23 are subjected to a rotational movement as a consequence of the projections 26 being received in recesses 27, which extend, at least partially, obliquely as appears in Fig. 10. In the uppermost position according to Fig. 9, the holding element 3a may support a corner fitting by means of the support surface 14 and the locking projections 18 may project into a hole present in the corner fitting but the locking members 23 are released since the portions 24 are orientated such that they, on elevation of the load unit, will not cause any hindrance. In the position according to Fig. 9 the support surface 14 is conceived to be located at the same level as the support surface 14 in the holding element embodiment denoted 3 (see Fig. 2). On lowering of the holding element 2a, the locking members 23 thereof will be rotated to a locking position according to Fig. 8. If a corner fitting is in engagement with the holding element 3a, bearing surfaces 55 present on the body 22 will supportingly co-operate with the lower side of the corner fitting 6 and in that way stop movement downwardly of the holding element 3a. In this situation the holding element 3a is in the same vertical position as the holding element 3 in Fig. 5. If, on the contrary, no corner fitting would have been in engagement with the locking member 23 during said lowering, the holding member 3a could instead have moved downwardly to the position according to Fig. 8, in which the holding member 3a is within the body 22 and does not form any hindrance to the load unit present above the holding member 3a.

As a comment to Fig. 10, which illustrates the tube section 33 and its recess 27, it is pointed out that the locking member 23 on the movement downwardly of the holding element 3a from a level, where the surfaces 14 and 55 are flush, to the lowermost position according to Fig. 8 should not be rotated. For this purpose the recess 27 comprises, at the top, an axially extending portion 27c, in which the projection 26 moves at the end of the lowering movement of the holding element 3a and along which there is no rotation of the locking members 23.

In all other respects the embodiment according to Figs. 8-10 is substantially analogous to the embodiment previously described and the detail differences which occur are only to be considered as cosmetical.

The device described may of course be modified in several ways within the scope of the invention.

## Claims

1. A device comprising holding elements (3) placed or intended to be placed on a carrier (2), for instance in the form of a vehicle, in order to hold a load unit (1) thereon, each individual holding element comprising support members (14) in order to vertically support the load unit and locking means (17) comprising locking members (18) adapted to lock the load unit and the carrier against relative movement in a horizontal plane by means of interaction with a corresponding locking member (6, 19) on the load unit (1), the holding element (3) being vertically movable relative to a body (22) secured/securable to the carrier and being arranged to be elevatable by means of a force exerting. arrangement (20) in order to be able to manoeuvre, with maintained support and locking functions as defined above, the load unit vertically in conjunction with further holding elements of this kind, the locking means (17) being arranged to also lock the load unit and carrier against relative movement vertically and for this purpose comprise, in addition to said first locking members (18), second locking members (23) which are movable between a releasing position and a locking position, the device comprising operating means (64) arranged to operate the second locking members (23) in a rotational movement between their releasing position and their locking position, **characterized in that** the operating means (64) comprise first and second mutually engaging guide members, first (27) of which are connected to the second locking members (23) and second (26) of which are connected to the body (22), said guide members (26, 27) being arranged to impart a rotational movement to the second locking members (23) in relation to the body (22) when the holding element (3) is being vertically moved in relation to the body (22) so as to operate the second locking members (23) to their releasing position on elevation of the holding element and to their locking position on lowering of the holding element (3).

2. A device according to claim 1, **characterized in that** the holding elements (3) arranged on the carrier (2) define, in positions in which the holding elements are lowered from their uppermost positions, a normal transport level (14, 55) for the load unit (1).

3. A device according to claim 1 or 2, **characterized in that** the holding elements (3) arranged on the carrier (2) are arranged to give rise to, in their upper positions, open spaces (21) under a supported load unit between the latter and the carrier, said open spaces being adapted for receiving load handling equipment (8), for instance members for transferring load units between different carriers.

4. A device according to any of claims 1-3, **characterized in that** the first and/or second guide members (26, 27) have an extent (27b) which is at least partially oblique relative to the substantially vertical path of movement of the holding element (3).

5. A device according to claim 4, **characterized in that** the guide members are formed by at least one set of mutually engaging projection/recess (26, 27).

6. A device according to any of claims 1-5, **characterized in that** the support members (14) are provided on a first part (28), which is prevented from rotation relative to the body, a second part (29) comprising the second locking members (23) being rotatable relative to the first part.

7. A device according to claim 6, **characterized in that** the first part (28) is arranged to be brought along by the second part (29) on elevation of the holding element (3).

8. A device according to claims 5-7, **characterized in that** the second part (29) is connected to the force exerting arrangement (20), which has a stationary portion (31) projecting into a cavity (32) in the second part, said portion being rigidly connected relative to the body (22), that the cavity is defined by a tubular section (33) of the second part (29), that the first guide members (27) are formed by at least one slot like recess in the tubular section, said recess being at least partially oblique, and that the second guide members (26) are formed by at least one projection, which is connected to the body and possibly also the stationary portion (31) of the force exerting arrangement.

9. A device according to claim 8, **characterized in that** a pressure fluid channel (37) to a working chamber (35) in the force exerting arrangement (20) extends through the projection (26).

10. A device according to claim 8 or 9, **characterized in that** the second part (29), which comprises the second locking members, projects through an opening (44) in the first part, which has a tubular section (49) extending around the tubular section (33) of the second part, and that the second part has a support surface (59) for supporting the first part (28).

11. A device according to any of claims 1-10, **characterized in that** the holding elements are of two different types, namely a first type (3), in which the locking means (17) project upwardly above the body when the holding elements are in their lower positions, and a second type (3a), in which the locking means are retracted within the body (22) when the holding elements are in their lower positions.

## Patentansprüche

1. Vorrichtung mit auf einem Träger (2), beispielsweise in Form eines Fahrzeugs, angebrachten oder anzubringenden Halteelementen (3) zum Halten einer Ladungseinheit (1) darauf, wobei jedes einzelne Halteelement Stützglieder (14), um die Ladungseinheit vertikal abzustützen, und Arretiermittel (17) mit Arretiergliedern (18) umfaßt, welche die Ladungseinheit und den Träger gegen relative Bewegung in einer horizontalen Ebene mit Hilfe eines Zusammenwirkens mit einem entsprechenden Arretierglied (6, 19) an der Ladungseinheit (1) arretieren können, wobei das Halteelement (3) relativ zu einem an dem Träger gesicherten/sicherbaren Körper (22) bewegbar ist und so angeordnet ist, daß es mit Hilfe einer kraftausübenden Anordnung (20) angehoben werden kann, um bei aufrechterhaltener Abstützung und aufrechterhaltenen Arretierfunktionen gemäß der obigen Definition die Ladungseinheit vertikal in Verbindung mit weiteren Halteelementen dieser Art manövrieren zu können, wobei die Arretiermittel (17) so angeordnet sind, daß sie auch die Ladungseinheit und den Träger gegen Bewegung vertikal arretieren und zu diesem Zweck zusätzlich zu den ersten Arretiergliedern (18) zweite Arretierglieder (23) umfassen, die zwischen einer Freigabeposition und einer Arretierposition bewegbar sind, wobei die Vorrichtung Betätigungsmittel (64) umfaßt, die die zweiten Arretierglieder (23) in einer Drehbewegung zwischen ihrer Freigabeposition und ihrer Arretierposition betätigen können, **dadurch gekennzeichnet, daß** die Betätigungsmittel (64) erste und zweite ineinandergreifende Führungsglieder umfassen, von denen die ersten (27) mit den zweiten Arretiergliedern (23) verbunden sind und die zweiten (26) mit dem Körper (22) verbunden sind, wobei die Führungsglieder (26, 27) auf die zweiten Arretierglieder (23) eine Drehbewegung in bezug auf den Körper (22) aufbringen können, wenn das Halteelement (3) vertikal in bezug auf den Körper (22) bewegt wird, so daß die zweiten Arretierglieder (23) beim Anheben des Halteelementes in ihre Freigabestellung und beim Absenken des Halteelementes (3) in ihre Arretierstellung betätigt werden.

2. Vorrichtung nach Anspruch 1, **dadurch gekennzeichnet, daß** die an dem Träger (2) angeordneten Halteelemente (3) in Positionen, in denen die Halteelemente aus ihren obersten Positionen abgesenkt werden, ein normales Transportniveau (14, 55) für die Ladungseinheit (1) bilden.

3. Vorrichtung nach Anspruch 1 oder 2, **dadurch gekennzeichnet, daß** die an dem Träger (2) angeordneten Halteelemente (3) in ihren oberen Positionen die Bildung von offenen Räumen (21) unter einer abgestützten Ladungseinheit zwischen der letzteren und dem Träger bewirken können, wobei die offenen Räume Ausrüstungen zur Handhabung von Ladungen (8), beispielsweise Glieder zum Überführen von Ladungseinheiten zwischen verschiedenen Trägern, aufnehmen können.

4. Vorrichtung nach einem der Ansprüche 1 - 3, **dadurch gekennzeichnet, daß** die ersten und/oder zweiten Führungsglieder (26, 27) ein Maß aufweisen, das relativ zu dem im wesentlichen vertikalen Bewegungspfad des Halteelementes (3) zumindest teilweise schräg liegt.

5. Vorrichtung nach Anspruch 4, **dadurch gekennzeichnet, daß** die Führungsglieder von mindestens einer Gruppe von ineinandergreifenden Vorsprüngen/Ausnehmungen (26, 27) gebildet werden.

6. Vorrichtung nach einem der Ansprüche 1 - 5, **dadurch gekennzeichnet, daß** die Stützelemente (14) an einem ersten Teil (28) vorgesehen sind, das sich nicht relativ zu dem Körper drehen kann, wobei ein die zweiten Arretierglieder (23) umfassendes zweites Teil (29) relativ zu dem ersten Teil drehbar ist.

7. Vorrichtung nach Anspruch 6, **dadurch gekennzeichnet, daß** das erste Teil (28) beim Anheben des Halteelementes (3) von dem zweiten Teil (29) mitgeführt werden kann.

8. Vorrichtung nach den Ansprüchen 5 - 7, **dadurch gekennzeichnet, daß** das zweite Teil (29) mit der kraftausübenden Anordnung (20) verbunden ist, die einen in einen Hohlraum (32) in dem zweiten Teil vorspringenden ortsfesten Abschnitt (31) aufweist, wobei der Abschnitt relativ zu dem Körper (22) starr verbunden ist, daß der Hohlraum von einem rohrförmigen Abschnitt (33) des zweiten Teils (29) gebildet wird, daß die ersten Führungsglieder (27) von minem rohrförmigen Abschnitt gebildet werden, wobei die Ausnehmung zumindest teilweise schräg ist, und daß die zweiten Führungsglieder (26) von mindestens einem Vorsprung gebildet werden, der mit dem Körper und möglicherweise auch mit dem ortsfesten Abschnitt (31) der kraftausübenden Anordnung verbunden ist.

9. Vorrichtung nach Anspruch 8, **dadurch gekennzeichnet, daß** durch den Vorsprung (26) ein Druckfluidkanal (37) zu einer Arbeitskammer (35) in der kraftausübenden Anordnung (20) verläuft.

10. Vorrichtung nach Anspruch 8 oder 9, **dadurch gekennzeichnet, daß** das zweite Teil, das die zweiten Arretierglieder umfaßt, durch eine Öffnung (44) in dem ersten Teil hervorsteht, das einen sich um den rohrförmigen Abschnitt (33) des zweiten Teils herum erstreckenden rohrförmigen Abschnitt (49) aufweist, und daß das zweite Teil eine Stützfläche (59) zum Abstützen des ersten Teils (28) aufweist.

11. Vorrichtung nach einem der Ansprüche 1 - 10, **dadurch gekennzeichnet, daß** die Halteelemente von zwei verschiedenen Arten sind, und zwar einer ersten Art (3), bei der die Arretiermittel (17) nach oben über den Körper hervorstehen, wenn sich die Halteelemente in ihren unteren Stellungen befinden, und einer zweiten Art (3a), bei der die Arretiermittel in den Körper zurückgezogen sind, wenn sich die Halteelemente in ihren unteren Stellungen befinden.

## Revendications

1. Dispositif comprenant des éléments de fixation (3) placés ou destinés à être placés sur un support (2), se présentant par exemple sous la forme d'un véhicule, destiné à tenir une unité de charge (1) dessus, chaque élément individuel de fixation comprenant des éléments de support (14) destinés à supporter de manière verticale l'unité de charge ainsi que des moyens de verrouillage (17) comprenant des éléments de verrouillage (18) adaptés pour bloquer l'unité de charge et le support contre tout mouvement relatif dans un plan horizontal au moyen de l'interaction avec un élément de verrouillage correspondant (6, 19) sur l'unité de charge (1), l'élément de fixation (3) pouvant être déplacé de manière verticale par rapport à un corps (22) fixé/pouvant être fixé au support et étant disposé de manière à pouvoir être élevé au moyen d'un agencement exerçant une force (20) afin d'être en mesure de manoeuvrer, les fonctions de support et de verrouillage étant maintenues telles que définies ci-dessus, l'unité de charge se trouvant conjointement avec d'autres éléments de fixation de ce type à la verticale, les moyens de verrouillage (17) étant disposés de manière à bloquer également l'unité de charge et le support contre tout mouvement relatif à la verticale et dans ce but comprenant, en plus desdits premiers éléments de verrouillage (18), des seconds éléments de verrouillage (23) qui peuvent être déplacés entre une position de déverrouillage et une position de verrouillage, le dispositif comprenant des moyens de commande (64) disposés de manière à commander les seconds éléments de verrouillage (23) dans un mouvement de rotation entre leur position de déverrouillage et leur position de verrouillage, **caractérisé en ce que** les moyens de commande (64) comprennent des premiers et des seconds éléments de guidage venant en prise les uns avec les autres, dont les premiers (27) sont reliés aux seconds éléments de verrouillage (23) et dont les seconds (26) sont reliés au corps (22), lesdits éléments de guidage (26, 27) étant disposés de manière à conférer un mouvement de rotation aux seconds éléments. de verrouillage (23) par rapport au corps (22) lorsque l'élément de fixation (3) est déplacé à la verticale par rapport au corps (22) de manière à commander les seconds éléments de verrouillage (23) dans leur position de déverrouillage lors de l'élévation de l'élément de fixation et dans leur position de verrouillage lors de l'abaissement de l'élément de fixation (3).

2. Dispositif selon la revendication 1, **caractérisé en ce que** les éléments de fixation (3) disposés sur le support (2) définissent, dans des positions dans lesquelles les éléments de fixation sont abaissés depuis leur position la plus supérieure, un niveau de transport normal (14, 5) pour l'unité de charge (1).

3. Dispositif selon la revendication 1 ou 2, **caractérisé en ce que** les éléments de fixation (3) disposés sur le support (2) sont disposés de manière à créer, dans leurs positions supérieures, des espaces ouverts (21) sous une unité de charge supportée entre ces derniers et le support, lesdits espaces ouverts étant adaptés pour recevoir un équipement de manipulation de charge (8), par exemple des éléments destinés à transférer des unités de charge entre des supports différents.

4. Dispositif selon l'une quelconque des revendications 1 à 3, **caractérisé en ce que** les premiers et/ou seconds éléments de guidage (26, 27) ont une portée (27b) qui est au moins partiellement oblique par rapport à la trajectoire de mouvement sensiblement verticale de l'élément de fixation (3).

5. Dispositif selon la revendication 4, **caractérisé en ce que** les éléments de guidage sont formés par au moins un ensemble de saillies/creux venant en prise les uns avec les autres (26, 27).

6. Dispositif selon l'une quelconque des revendications 1 à 5, **caractérisé en ce que** les éléments de support- (14) sont prévus sur une première partie (28), que l'on empêche de tourner par rapport au corps, une seconde partie (29) comprenant les seconds éléments de verrouillage (23) qui peuvent tourner par rapport à la première partie.

7. Dispositif selon la revendication 6, **caractérisé en ce que** la première partie (28) est disposée de manière à être ramenée par la seconde partie (29) lors de l'élévation de l'élément de fixation (3).

8. Dispositif selon les revendications 5 à 7, **caractérisé en ce que** la seconde partie (29) est reliée à l'agencement exerçant une force (20), qui a une partie fixe (31) faisant saillie dans un creux (32) dans la seconde partie, ladite partie étant reliée de manière rigide par rapport au corps (22), **en ce que** le creux est défini par une partie tubulaire (33) de la seconde partie (29), **en ce que** les premiers éléments de guidage (27) sont formés par au moins un creux en forme de fente dans la partie tubulaire, ledit creux étant au moins partiellement oblique, et **en ce que** les seconds éléments de guidage (26) sont formés par au moins une saillie, qui est reliée au corps et éventuellement également à la partie fixe (31) de l'agencement exerçant une force.

9. Dispositif selon la revendication 8, **caractérisé en ce qu'**un canal fluidique de pression (37) en direction d'une chambre de travail (35) dans l'agencement exerçant une force (20) s'étend à travers la saillie (26).

10. Dispositif selon la revendication 8 ou 9, **caractérisé en ce que** la seconde partie (29), qui comprend les seconds éléments de verrouillage, fait saillie à travers une ouverture (44) dans la première partie, qui comporte une partie tubulaire (49) s'étendant autour de la partie tubulaire (33) de la seconde partie, et **en ce que** la seconde partie présente une surface de support (59) destinée à supporter la première partie (28).

11. Dispositif selon l'une quelconque des revendications 1 à 10, **caractérisé en ce que** les éléments de fixation sont de deux types différents, à savoir un premier type (3), dans lequel les éléments de verrouillage (17) font saillie vers le haut au-dessus du corps lorsque les éléments de fixation se trouvent dans leurs positions inférieures, et un second type (3a), dans lequel les moyens de verrouillage sont rétractés à l'intérieur du corps (22) lorsque les éléments de fixation se trouvent dans leurs positions abaissées.
